# EUROPÄISCHE PATENTSCHRIFT

(11) **EP 2 888 329 B1**
(45) Veröffentlichungstag und Bekanntmachung des Hinweises auf die Patenterteilung: **18.04.2018**
(21) Anmeldenummer: 13750308.2
(22) Anmeldetag: 13.08.2013
(51) Int. Cl.: C09J 7/02

(54) **STRAPPING-KLEBEBAND**
STRAPPING ADHESIVE TAPE
RUBAN ADHÉSIF DE CERCLAGE

(30) Priorität: 24.08.2012 DE 102012215133
(43) Veröffentlichungstag der Anmeldung: 01.07.2015
(73) Patentinhaber: tesa SE, 22848 Norderstedt (DE)
(72) Erfinder: KEREP, Patrick, 22767 Hamburg (DE); KRAUSE, Christian, 21224 Rosengarten (DE); STORBECK, Reinhard, 22457 Hamburg (DE); YANG-VOSS, Jian, 20253 Hamburg (DE)
(86) Internationale Anmeldenummer: PCT/EP2013/066903
(87) Internationale Veröffentlichungsnummer: WO 2014/029664

(56) Entgegenhaltungen:
- EP-A2- 1 211 297
- WO-A1-02/10304

## Beschreibung

Die Erfindung betrifft ein Verfahren zur Herstellung eines Klebebandes. Strapping-Klebebänder sind insbesondere zum Bündeln von Gegenständen geeignet. Solche Gegenstände sind zum Beispiel Rohre, Profile oder gestapelte Kartons (Strapping-Anwendung).
Des Weiteren zählen zu den Strapping-Anwendungen die Fixierung beweglicher Teile an Weißgeräten (wie Kühl- und Gefriergeräten oder Klimageräten), an Rotgeräten wie (Gas-)herden und allgemein an Elektrogeräten wie beispielsweise Druckern.
Im Fachjargon werden die Bereiche wie folgt bezeichnet:
- Bereich Appliance: Fixierung beweglicher Teile von Kühl- und Gefriergeräten und anderer Haushaltsgeräte wie Gasherde etc.
- Bereich Office Automation: Fixierung beweglicher Teile von Druckern, Kopiergeräten etc.
Die rückstandsfreie Entfernbarkeit (Wiederablösbarkeit) eines Strapping-Tapes von verschiedenen Untergründen hängt wesentlich von den Abzugskräften ab, die sich nach unterschiedlichen Zeiträumen beim Ablösen des Bandes von den jeweiligen Untergründen entwickeln. Idealerweise nimmt die Abzugskraft im Vergleich zur anfänglichen nur geringfügig oder sogar gar nicht zu, da mit zunehmender Abzugskraft das Risiko steigt, dass entweder der Träger reißt oder Rückstände zurück bleiben. So kann der Folienträger im Falle zu hoher Kräfte versagen und reißen und/oder aufspleißen. Weitere Resultate zu hoher Abzugskräfte können entweder das kohäsive Spalten der Klebmasse oder auch das Umspulen der Masse durch Ablösen vom Träger sein.

In allen Fällen ergeben sich unerwünschte Rückstande des Klebebandes auf dem Untergrund, sei es in Form von Teilen des Bandes an sich oder von Teilen der Klebmasse.

Es besteht insofern der Bedarf an einem Strapping-Klebeband, welches universell auf allen für die Anwendung relevanten Untergründen angewendet werden kann wie zum Beispiel die Kunststoffe ABS, PS, PP, PE, PC, POM, wie verschiedene Metalle, wie lösemittel-, wasserbasierte und als Pulver aufgetragene Lacke und andere lösungsmittelfreie Lacke (zum Beispiel UV-härtende Lacke), welches gleichzeitig auf diesen Untergründen mit ausreichend hohen Klebkräften von in der Regel mindestens 2,5 N/cm sicher klebt, aber dennoch rückstandsfrei und beschädigungsfrei auch nach längerer Lagerung bei unterschiedlichen Temperaturen (Temperaturbereich: -20 °C bis +60 °C) und UV-Bestrahlung entfernt werden kann.

Obwohl Strapping-Klebebänder in sehr verschiedenen Anwendungen genutzt werden, haben sie einige wesentliche Eigenschaften, damit sie die besonderen an sie gestellten Anforderungen erfüllen. Dies sind - ohne dass diese Aufstellung den Anspruch auf Vollständigkeit erhebt - eine sehr hohe Zugfestigkeit (Höchstzugkraft), eine sehr gute Dehnresistenz entsprechend einem hohen Modul bei geringen Dehnungen und eine geringe Reißdehnung, eine ausreichende aber nicht zu hohe Klebkraft, eine dosierte Klebkraft auf der eigenen Rückseite, die rückstandsfreie Wiederablösbarkeit nach den Beanspruchungen der eigentlichen Anwendung, die Robustheit des Trägers gegenüber mechanischer Belastung und für einige Anwendungen auch noch die Beständigkeit des Klebebandes gegenüber UV-Bestrahlung und gegen viele Chemikalien.

Während einige der Eigenschaften auf die Klebmasse oder andere Funktionsschichten des Klebebands zurückzuführen sind, so basieren die Dehnbarkeit und die Zugfestigkeit wesentlich auf den physikalischen Eigenschaften des verwendeten Trägermaterials.

Ein Klebeband, das als Strapping-Klebeband Verwendung finden soll, sollte zumindest einige, vorzugsweise möglichst viel, weiter vorzugsweise alle der folgenden Eigenschaften aufweisen:
- Das Klebeband muss lose Teile während des Transports sichern, das heißt, das Klebeband sollte eine hohe Reißfestigkeit und ausreichende Klebkräfte aufweisen.
- Das Klebeband darf sich unter Belastung nicht stark dehnen, das heißt, das Klebeband sollte hohe F1-F10%-Werte (hohe Werte der Zugfestigkeit bei 1 %- und 10 %-Dehnung] beziehungsweise ein hohes E-Modul aufweisen.
- Das Klebeband muss unter verschiedenen klimatischen Bedingungen funktionieren, das heißt, das Klebeband sollte eine Klimabeständigkeit im Temperaturbereich zwischen -20 °C bis 40 °C und einer relativen Luftfeuchte von bis zu 95 % aufweisen.
- Das Klebeband sollte rückstandsfrei und ohne Kohäsionsbruch wiederabziehbar von verschiedenen Untergründen im Temperaturbereich zwischen -20 °C bis 40 °C und einer relativen Luftfeuchte von bis zu 95 % sein.
- Das Klebeband sollte wärmebeständig beim Trocknen der Klebstoffbeschichtung im Herstellprozess des Klebebandes sein.
- Das Klebeband sollte leicht zu verwenden sein, das heißt, das Klebeband sollte vorzugsweise eine geringe Abrollkraft aufweisen, was insbesondere über die Verwendung eines Carbamat- oder Silikon-Releases sichergestellt werden kann.
- Das Klebeband sollte auf verschiedenen Haftgründen gut kleben und ausreichend Kohäsion haben, um das Transportgut zu sichern, das heißt, das Klebeband kann eine Klebmasse auf Basis Naturkautschuk, SIS-Kautschuk oder Acrylat aufweisen.

Der Stand der Technik umfasst zahlreiche Klebebänder, die im Bereich Strapping (Bündelung), Appliance (Transportsicherung beweglicher Teile wie Schubfächer, Einlegeböden, Klappen insbesondere in Haushaltsgeräten etc.) und in der Möbelindustrie eingesetzt werden.

Es gibt hauptsächlich drei verschiedene Folien, die für Strapping-Klebebänder als Trägermaterialien zum Einsatz kommen:
i) Biaxial orientierte PET-Folien mit einer Dicke zwischen 30 und 60 µm
ii) Monoaxial orientierte PE- und PP-Folien mit einer Dicke zwischen 40 und 150 µm
iii) Filamentverstärkte BOPP- und PET-Folien, wobei als Verstärkung Monofilamente und Crossfilamente aus Glas oder PET eingesetzt werden

Innerhalb der oben genannten Materialien hat sich aufgrund des besten Kosten/Nutzenverhältnisses MOPP als Trägermaterial vor allem im Appliancebereich durchgesetzt. Im Vergleich zu BOPP ist MOPP teurer, bietet aber deutlich bessere mechanische Eigenschaften. Umgekehrt sind filamentverstärkte Klebebänder meist deutlich teurer und bieten im Verhältnis dazu nur mäßig verbesserte Performance.

MOPP (monoaxial gerecktes Polypropylen) wird aus bestimmten PP- beziehungsweise PP/PE-Copolymertypen via Extrusion und anschließender Verstreckung hergestellt. Dabei muss das eingesetzte Material idealerweise einen geeigneten Schmelzindex (MFI) zwischen 0,5 bis 2 aufweisen, da das Material anschließend sonst nicht mehr genügend verstreckt werden kann.

Bei der Herstellung von MOPP-Folien wird üblicherweise ein Randkantenbeschnitt durchgeführt, bei dem die Ränder abgeführt und wieder in den Extrusionsprozess zurückgeführt werden. Der Anteil an diesem (recycelbaren) Beschnitt liegt dabei um 5 %.

Neben den zu erfüllenden mechanischen Anforderungen gewinnen heute andere Aspekte eine zunehmende Rolle.
Aufgrund von ökologischen Gesichtspunkten, der Nachhaltigkeit und vor dem Hintergrund der immer knapper werdenden Ressourcen an Erdöl und auf der anderen Seite eines weltweit stark wachsenden Verbrauches an Kunststoffen gibt es seit einigen Jahren die Bestrebung, Kunststoffe zu recyceln und somit diese dem Herstellprozess erneut zuzuführen sowie daraus folgend die Verwendung dieser voranzutreiben.
Dieses Vorgehen reduziert die Abfallmenge und schont somit in zu begrüßender Weise die Umwelt.

Es sind im Stand der Technik erste Ansätze erkennbar, in denen beispielsweise Polypropylen bei der Folienherstellung recycelt wird.

In der US 2011/0236702 A1 wird beispielsweise ein Verfahren angegeben, bei dem recyceltes biaxiales Polypropylen zur Bildung neuer Folien Verwendung findet. Allerdings findet sich die klare Aussage, dass der Anteil an recyceltem Polypropylen nicht zu hoch sein darf, weil ansonsten die Eigenschaften der Folie nicht mehr den gestellten Anforderungen genügen.

Der Anteil des recyceltem Materials in der zur Extrusion kommenden Mischung wurde in der Vergangenheit klein gehalten.

Der Fachmann musste durch die hohen mechanischen Beanspruchungen durch Scherung und die langeinwirkende Hitze, die beim Extrudieren erforderlich ist (die üblichen Verweildauern bei der Extrusion liegen bis zu 180 Sekunden), einen Abbau der Polymere erwarten, womit sich folgerichtig die mechanischen Eigenschaften verschlechtern sollten.
Er wusste, dass beim Abbau unterschiedlichste Oxidationsprodukte entstehen und dass sich Kettenlänge und Polydispersität dabei nachteilig verändern.
Diese Vermutung wird auch durch den Stand der Technik bestätigt, wie beispielsweise in den Aufsätzen "Degradation of Polyethylene During Extrusion. II. Degradation of Low-Density Polyethylene, Linear Low-Density Polyethylene, and High-Density Polyethylene in Film Extrusion" (Journal of Applied Polymer Science, Vol. 91, 1525 bis 1537 (2004) © 2003 Wiley Periodicals, Inc) oder "Messungen zum Materiaabbau von Polypropylen" (Zeitschrift Kunststofftechnik / Journal of Plastics Technology 8 (2012) 4) zu entnehmen ist.

Aufgabe der Erfindung ist es, ein Verfahren zur Herstellung eines Klebebandes zur Verfügung zu stellen, das alle erforderlichen mechanischen Eigenschaften aufweist, um insbesondere als Strapping-Klebeband Verwendung finden zu können, und das gleichzeitig den steigenden Anforderungen an eine umweltschonende Produktion genügt.

Gelöst wird diese Aufgabe durch ein Verfahren wie es im Hauptanspruch näher gekennzeichnet ist. In den Unteransprüchen sind vorteilhafte Ausführungsformen der Erfindung beschrieben. Des Weiteren ist die Verwendung des erfindungsgemäßen Klebebands umfasst.

Demgemäß betrifft die Erfindung ein Verfahren zur Herstellung eines Klebebandes mit einem Träger aus einer Folie, auf die zumindest einseitig eine Klebemasse aufgebracht ist, wobei die Folie eine monoaxial gereckte Folie aus Polypropylen ist, die zu mindestens 80 Gew.-% Polypropylen enthält, das zuvor zumindest einmal verarbeitet, vorzugsweise zumindest einmal extrudiert worden ist, wobei die Folie ein Reckverhältnis bei der Reckung in Längsrichtung von 1:4 bis 1:10 aufweist.

Bevorzugt wird das Polypropylen zwischen ein- und fünfmal recycelt. Das heißt, dass das zumindest einmal verarbeitete Polypropylen, das bevorzugt extrudiert war, wieder dem Herstellungsprozeß zugeführt wird. Dieser Vorgang kann sich vorzugsweise bis zu fünfmal wiederholen, also das gegebenenfalls mehrfach verarbeitete Polypropylen wird fünfmal dem Herstellungsprozeß zur Herstellung neuer Folien zugeführt.
Vorteilhaft ist es, wenn das Polypropylen lediglich einmal oder bis zu zweimal recycelt wird.

Gemäß einer bevorzugten Ausführungsform der Erfindung liegt der Anteil an zumindest einmal verarbeitetem, vorzugsweise zumindest einmal extrudiertem Polypropylen in der Folie bei mindestens 85 Gew-%, weiter vorzugsweise bei 90 Gew.-%, ganz besonders vorzugseise bei 95 Gew.-% und ganz, ganz besonders vorzugsweise bei 100 Gew.-%.

Bei dem Material aus Polypropylen, das zuvor zumindest einmal extrudiert worden ist, handelt es sich beispielsweise um den erwähnten Kantenschnitt, der bei der Herstellung von Polypropylenfolien anfällt. Anstatt diesen unökologisch und unökonomisch zu entsorgen, wird er erfindungsgemäß genutzt, um daraus wieder neue Polypropylenfolien herzustellen.

Das Reckverhältnis bei der Reckung der extrudierten Primärfolie in Längsrichtung (Maschinenrichtung) beträgt vorzugsweise 1:5 bis 1:9, besonders bevorzugt 1:6 bis 1:7,5 ganz besonders bevorzugt 1:6 bis 1:6,5. Ein Reckverhältnis 1:6 gibt an, dass aus einem Abschnitt der Folie von zum Beispiel 1 m Länge ein Abschnitt von 6 m Länge der gereckten Folie entsteht. Oft wird das Reckverhältnis auch als Quotient der Liniengeschwindigkeit vor der Verstreckung und der Liniengeschwindigkeit nach der Verstreckung bezeichnet. Die im Folgenden verwendeten Zahlenangaben beziehen sich auf die Reckung. Das Recken erfolgt, ohne dass die Breite der Primärfolie wesentlich abnimmt, einzig zu Lasten der Dicke der Folie.

Durch die Verstreckung in Maschinenrichtung lassen sich Polypropylenfolien mit den höchsten Zugfestigkeiten und Moduln erzielen. Die sehr hohe Dehnungsresistenz von ausschließlich monoaxial orientierten Polypropylenfolien ist eine der wesentlichsten Eigenschaften für den Einsatz als Strapping-Klebebandträger. In vielen Anwendungen wie dem Sichern von Kartonstapeln, dem Bündel auch schwerer Gegenstände oder auch dem Fixieren unter Spannung stehender Enden von rollenförmig aufgewickelter Bleche, um nur einige Beispiele zu nennen, ist diese Eigenschaft unabdingbar.

Das Wirkprinzip der Orientierung liegt in der Ausrichtung der Polymermolekülketten und der daraus gebildeten Kristallstrukturen sowie in der Ausrichtung der amorphen Bereiche in bestimmte Vorzugsrichtungen und der damit verbundenen Festigkeitszunahme.
Die enorm hohe Zugfestigkeit derartiger Träger wird für die vorgesehenen Anwendungen gewinnbringend eingesetzt. Zum Beispiel werden in Maschinenrichtung höchste Lasten von über 350 N/mm² (siehe beispielsweise in der DE 10 2006 062 249 A1) gehalten.

Die Trägerfolie weist an den Oberflächen vorzugsweise keine Rippenstrukturen auf, da sie die Haftung während des Reckvorgangs verschlechtern und keine homogene Verstreckung ermöglichen. Wenn die Folie durch Coextrusion mehrschichtig aufgebaut ist, hat sie gemäß einer bevorzugten Ausführungsform der Erfindung auch im Inneren keine Rippenstrukturen, sondern planparallel ausgerichtete Schichten, damit keine aufwändige und störanfällige Düse bereitgestellt werden muss.

Vorzugsweise besteht der Träger aus exakt einer Folienlage (neben den noch zu beschreibenden Hilfsschichten wie Primerung oder Release).
Der Träger kann aber neben der erfindungsgemäßen Polypropylenschicht eine oder zwei oder weitere Folienlagen aufweisen.
Diese weiteren Folienschichten müssen nicht aus recyceltem Material bestehen. Im Sinne des ökologischen Gedankens wird bevorzugt, wenn diese ebenfalls aus recycelten Polymeren bestehen.

Die Folie des erfindungsgemäßen Klebebandes wird durch Extrusion und Verstrecken in Längsrichtung unter Verwendung üblicher, allgemein bekannter Verfahren erhalten.

Vorzugsweise wird als Polypropylenpolymer wird vorzugsweise ein Granulat eingesetzt.

Das Polypropylen kann ein reines Polypropylen sein, also nur aus Propylenmonomeren aufgebaut sein. Geeignet sind auch Polypropylen-Random-Copolymere oder Polypropylen-Block-Copolymere.

Als Comonomer kommen dabei Olefine, insbesondere Ethylen und/oder Buten, in Frage. Der Begriff Copolymer in hier sinngemäß dahingehend zu verstehen, dass er Terpolymere mit einschließt.
Der Anteil der Comonomere im Polypropylen liegt bei unter 50 Gew.-%, vorzugsweise bei unter 30 Gew.-%, weiter vorzugsweise bei unter 15 Gew.-%, besonderes vorzugsweise bei unter 10 Gew.-%.

Erfindungsgemäß wird unter Polypropylen auch ein Blend aus einem Polypropylen und zumindest einem anderen Polymer verstanden. Der Anteil des oder der Polymere liegt gemäß einer bevorzugten Ausführungsform bei unter 15 Gew.-%, vorzugsweise bei unter 10 Gew.-%, besonders vorzugsweise bei unter 5 Gew.-%.
Als weiteres Polymer wird insbesondere Polyethylen eingesetzt.

Vorzugsweise liegen die Schmelzindizes der zu recycelten Polypropylenpolymere im für Flachfolienextrusion geeigneten Bereich liegen. Dieser Bereich sollte zwischen 0,3 und 10 g/10 min, vorzugsweise im Bereich von 0,5 und 2 g/10 min, vorzugsweise im Bereich von 0,5 und 3 g/10 min, besonders vorzugsweise im Bereich von 0,5 und 5 g/10 min (gemessen bei 230 °C/2,16 kg) liegen.
Bei besonders vorteilhaften Ausführungsformen der Erfindung betragen die Schmelzindizes bis zu 5 g/10 min. Es sind aber auch Varianten möglich, bei denen die Schmelzindizes zwischen 5 g/10 min und 10 g/10 min liegen.

Als Träger für das Klebeband können die beschriebenen Folien direkt eingesetzt werden, wobei in der Regel eine Fluor-, eine Plasmabehandlung eine Corona- oder auch Flammvorbehandlung der später mit der Klebmasse zu beschichtenden Seite erfolgt, um die Klebmasse besser auf dem Träger zu verankern.

Eine weitere Verbesserung der Haftung gleichbedeutend mit der Verankerung der Klebmasse auf dem Träger (oder als Alternativbehandlung) kann durch den Einsatz von Primern erfolgen. Mit diesen kann zum einen die Oberflächenenergie zielführend eingestellt werden und zum anderen zum Beispiel bei Verwendung von Isocyanat haltigen Primern eine chemische Anbindung der elastomeren Klebmassenkomponente an den Träger verfolgt werden.

Das übliche Flächenauftragsgewicht des Primers liegt dabei zwischen 0,1 und 10 g/m². Eine weitere Möglichkeit, die Verankerung zu verbessern, besteht in der Verwendung von Trägerfolien, die durch Coextrusion gezielt mit einer für die Anbindung zum Haftklebstoff günstigen Polymeroberfläche ausgestattet sind.

Beschreibungen der üblicherweise für Klebebänder verwendeten Klebmassen sowie Trennlacken und Primern finden sich zum Beispiel im "Handbook of Pressure Sensitive Adhesive Technology" von Donatas Satas (van Nostrand, 1989).

Vorzugsweise ist die auf dem Trägermaterial aufgebrachte Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Um aus dem Träger ein Klebeband herzustellen, kann auf alle bekannten Klebemassensysteme zurückgegriffen werden. Neben den bevorzugten auf Natur- oder Synthesekautschuk basierten Klebemassen sind Silikonklebemassen sowie Polyacrylatklebemassen, vorzugsweise eine niedermolekulare Acrylatschmelzhaftklebemasse, verwendbar.

Bevorzugt wird eine Klebemasse verwendet, die aus der Gruppe der Naturkautschuke oder aus einem beliebigen Blend aus Naturkautschuken und/oder Synthesekautschuken besteht, wobei der Anteil des Synthesekautschuk in dem Blend gemäß einer bevorzugten Variante höchstens so groß wie der Anteil des Naturkautschuks ist.

Kautschukklebemassen zeigen eine gute Kombination aus Klebkraft, Tack und Kohäsion sowie ausgewogenes Klebverhalten auf nahezu allen relevanten Haftuntergründen und sind somit prädestiniert. Allgemeine Informationen zu Kautschukklebemassen sind unter anderem Standardwerken für Klebebänder wie beispielsweise dem "Handbook of Pressure Sensitive Adhesive Technology" von Donatas Satas zu entnehmen.

Der Naturkautschuk oder die Naturkautschuke können grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.
Stellvertretend genannt seien an dieser Stelle vor allem die besonders verträglichen Styrol-Isopren-Styrol (SIS)- und Styrol-Butadien-Styrol (SBS)-Typen. Geeignete Elastomere zum Abmischen sind auch zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.
Daneben hat sich ein 100%-System auf Styrol-Isopren-Styrol (SIS) als geeignet erwiesen.

Eine Vernetzung ist vorteilhaft für die Verbesserung der Wiederabziehbarkeit des Klebebandes nach der Anwendung und kann thermisch oder durch Bestrahlung mit UV-Licht oder Elektronenstrahlen erfolgen.
Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.

Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.
Die thermische Anregung der Vernetzer kann auch durch IR-Strahlen oder hochenergetische Wechselfelder erfolgen.

Verwendbar sind Klebemassen auf Lösemittelbasis, auf wässriger Basis oder auch als Hotmeltsystem. Auch eine Masse auf Acrylathotmelt-Basis ist geeignet, wobei diese einen K-Wert von mindestens 20 aufweisen kann, insbesondere größer 30, erhältlich durch Aufkonzentrieren einer Lösung einer solchen Masse zu einem als Hotmelt verarbeitbaren System
Das Aufkonzentrieren kann in entsprechend ausgerüsteten Kesseln oder Extrudern stattfinden, insbesondere beim damit einhergehenden Entgasen ist ein Entgasungsextruder bevorzugt.
Eine derartige Klebemasse ist in der DE 43 13 008 A1 dargelegt, auf deren Inhalt hiermit Bezug genommen wird und deren Inhalt Teil dieser Offenbarung und Erfindung wird.
Die Klebemasse auf Acrylathotmelt-Basis kann aber auch chemisch vernetzt sein.

In einer weiteren Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich ebenfalls als geeignet zeigt, ist eine niedermolekulare Acrylatschmelzhaftklebemasse, wie sie unter der Bezeichnung acResin UV oder Acronal®, insbesondere Acronal® DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

Schließlich sei erwähnt, dass auch auf Polyurethan oder Polyolefin basierende Kleber geeignet sind.

Zur Optimierung der Eigenschaften kann die zum Einsatz kommende Selbstklebemasse mit Klebrigmachern (Harzen) und/oder einem oder mehreren Zuschlagstoffen wie Weichmachern, Füllstoffen, Pigmenten, UV-Absorbern, Lichtschutz-, Alterungsschutz-, Vernetzungsmitteln, Vernetzungspromotoren oder Elastomeren abgemischt sein.

Klebrigmacher sind beispielsweise insbesondere hydrierte und nicht hydrierte Kohlenwasserstoffharze (zum Beispiel aus ungesättigten C₅- oder C₇-Monomeren), Terpenphenolharze, Terpenharze aus Rohstoffen wie α- oder β-Pinen und/oder δ-Limone, aromatische Harze wie Cumaron-Inden-Harze oder Harze aus Styrol oder α-Methylstyrol wie Kolophonium und seine Folgeprodukte wie disproportionierte, dimerisierte oder veresterte Harze, wobei Glycole, Glycerin oder Pentaerythrit eingesetzt werden können. Besonders geeignet sind alterungsstabile Harze ohne olefinische Doppelbindung wie zum Beispiel hydrierte Harze.
Auf die Darstellung des Wissensstandes im "Handbook of Pressure Sensitive Adhesive Technology" von Donatas Satas (van Nostrand, 1989) sei ausdrücklich hingewiesen.

Geeignete Füllstoffe und Pigmente sind beispielsweise Fasern, Ruß, Zinkoxid, Titandioxid, Mikrovollkugeln, Voll- oder Hohlglaskugeln, Kieselsäure, Silikate, Kreide Ruß, Titandioxid, Calciumcarbonat und/oder Zinkcarbonat.

Geeignete Alterungsschutzmittel (Antiozonantien, Antioxidantien, Lichtschutzmittel usw.) für die Klebemassen sind primäre Antioxidantien wie zum Beispiel sterisch gehinderte Phenole, sekundäre Antioxidantien wie zum Beispiel Phosphite oder Thiosynergisten (Thioether) und/oder Lichtschutzmittel wie zum Beispiel UV-Absorber oder sterisch gehinderte Amine.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Vernetzungsmittel sind beispielsweise Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacrylsäure.

Die aufgezählten Stoffe sind wiederum nicht zwingend, die Klebemasse funktioniert auch, ohne dass diese einzeln oder in beliebiger Kombination zugesetzt sind, also ohne Harze und/oder restliche Zuschlagstoffe.

Die Beschichtungsstärke mit Klebemasse liegt vorzugsweise im Bereich von 1 bis 100 g/m², insbesondere 10 bis 50 g/m², weiter vorzugsweise im Bereich von 15 bis 35 g/m².

Die Herstellung und Verarbeitung der Haftklebemassen kann aus Lösung, Dispersion sowie aus der Schmelze erfolgen. Bevorzugte Herstell- und Verarbeitungsverfahren erfolgen aus Lösung oder Dispersion.

Die so hergestellten Haftklebmassen können dann mit den allgemein bekannten Verfahren auf den Träger gebracht werden. Bei Verarbeitung aus der Schmelze können dies Auftragsverfahren über eine Düse oder einen Kalander sein.
Bei Verfahren aus der Lösung sind Beschichtungen mit Rakeln, Messern oder Düsen bekannt, um nur einige wenige zu nennen.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband kann sowohl in Form einer Rolle, also in Form einer archimedischen Spirale auf sich selbst aufgerollt, als auch klebmasseseitig eingedeckt mit Trennmaterialien wie silikonisiertem Papier oder silikonisierter Folie hergestellt werden. Als Trennmaterial eignet sich bevorzugt ein nicht-fusselndes Material wie eine Kunststofffolie oder ein gut verleimtes, langfaseriges Papier.
Die Klebebänder weisen insbesondere Lauflängen von 1000 bis 30.000 m auf. Als Breite der Rollen werden üblicherweise 10, 15, 19, 25 und 30 mm gewählt.

Auf der Rückseite des Klebebandes kann ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv (antiadhäsiv) wirkende Stoffe ausgerüstet sein.
Geeignete Trennmittel umfassen tensidische Releasesysteme auf Basis langkettiger Alkylgruppen wie Stearylsulfosuccinate oder Stearylsulfosuccinamate, aber auch Polymere, die ausgewählt sein können aus der Gruppe bestehend aus Polyvinylstearylcarbamaten, Polyethyleniminstearylcarbamiden, Chrom-Komplexen von C₁₄- bis C₂₈-Fettsäuren und Stearyl-Copolymeren, wie sie zum Beispiel in DE 28 45 541 A beschrieben sind. Ebenfalls geeignet sind Trennmittel auf Basis von Acrylpolymeren mit perfluorierten Alkylgruppen, Silikone oder Fluorsilikonverbindungen, zum Beispiel auf Basis von Poly(dimethyl-Siloxanen). Besonders bevorzugt umfasst die Releaseschicht ein Polymer auf Silikonbasis. Besonders bevorzugte Beispiele solcher trennwirksamen Polymere auf Silikonbasis umfassen polyurethan- und/oder polyharnstoffmodifizierte Silikone, bevorzugt Organopolysiloxan/Polyharnstoff/Polyurethan-Blockcopolymere, besonders bevorzugt solche wie in Beispiel 19 von EP 1 336 683 B1 beschrieben, ganz besonders bevorzugt anionisch stabilisierte polyurethan- und harnstoffmodifizierte Silikone mit einem Silikon-Gewichtsanteil von 70 % und einer Säurezahl von 30 mg KOH/g. Der Einsatz polyurethan- und/oder harnstoffmodifizierter Silikone bedingt den Effekt, dass die erfindungsgemäßen Produkte bei optimierter Alterungsbeständigkeit und universeller Beschriftbarkeit ein optimiertes Trennverhalten aufweisen. In einer bevorzugten Ausführungsform der Erfindung umfasst die Releaseschicht 10 bis 20 Gew. %, besonders bevorzugt 13 bis 18 Gew.-% des trennwirksamen Bestandteils. Die Klebebänder werden vorzugsweise in den Breiten 9 bis 150 mm, insbesondere 19 bis 50 mm verwendet und besitzen dabei eine bevorzugte Dicke von 70 bis 300 µm, vorzugsweise 75 bis 120 µm. Die Erfindung umfasst ein Verfahren zur Herstellung der Klebebänder, umfassend die Schritte:
- Aufschmelzen von Polypropylen, das zu mindestens 80 Gew.-% aus Polypropylen besteht, das zuvor zumindest einmal verarbeitet, vorzugsweise extrudiert worden ist
- Extrudieren der Polypropylenschmelze zu einer Folie
- Monoaxiales Recken der Folie mit einem Reckverhältnis in Längsrichtung von 1:4 bis 1:10
- Beschichten der Folie mit einer Haftklebemasse

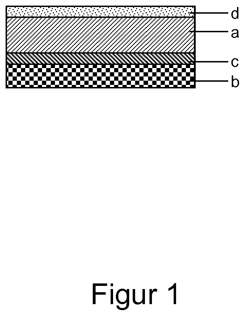

In der Figur 1 ist ein typischer Aufbau des erfindungsgemäßen Klebebands gezeigt.
Das Produkt besteht aus einer Folie (a) und einer Klebmasse (b). Zusätzlich können auch ein Primer (c) zur Verbesserung der Haftung zwischen Klebmasse und Träger sowie ein Rückseitenrelease (d) eingesetzt werden.

Der Träger (a) besteht aus einer monoaxial orientierten Polypropylenfolie mit einer bevorzugten Dicke zwischen 30 und 170 µm.
Die Klebmasse (b) ist eine Mischung aus Naturkautschuk oder anderen Elastomeren sowie verschiedenen Harzen und kann gegebenenfalls auch Weichmacher, Füllstoffe und Alterungsschutzmittel enthalten.

Es hat sich überraschenderweise gezeigt, dass MOPP sogar mit 100% recyceltem PP-Rohstoff hergestellt werden kann, ohne dass sich die mechanischen Eigenschaften dabei signifikant verändern.

Dies ist insofern überraschend als dass zu erwarten wäre, dass durch die mechanische Beanspruchung der PP-Rohstoff abbaut und sich dadurch die Qualität des Extrudats und damit die mechanischen Eigenschaften der Folie verschlechtern sollten. Wie im unten gezeigten Beispiel liegen die Werte für beide Folien auf demselben Niveau.

Das erfindungsgemäße Klebeband zeigt eine gute Wiederablösbarkeit von den verschiedensten Untergründen. Auf der anderen Seite ist aber auch bei Plustemperaturen die Wiederablösbarkeit gegeben, das heißt, es sind keine Rückstände durch Kohäsionsversagen der Klebmasse, Masseumspulen (schlechte Masseverankerung) oder ein Trägerspalte zu beobachten.

Der Träger weist eine ausreichende innere Festigkeit in alle drei Raumrichtungen und hohe Schlagzähigkeit auf.

Aufgrund der geschilderten Eigenschaften lässt sich das Klebeband hervorragend als Strapping-Klebeband zum Bündeln und Palettieren von Kartonagen und anderen Gütern einsetzen, und dies auch bei tiefen Temperaturen.
Des Weiteren lassen sich mit dem Klebeband bewegliche Teile wie Türen, Klappen usw. an Druckern oder Kühlschränken während des Transport vom Hersteller zum Verkäufer beziehungsweise weiter zum Käufer hervorragend fixieren, und dies auch bei tiefen Temperaturen.
Die Klebebänder sind rückstandsfrei wiederablösbar.

Im Folgenden wird die Erfindung durch einige Beispiele näher erläutert, ohne die Erfindung damit einschränken zu wollen.

### Beispiele

### Rohstoffe

Dow 7C06: Polypropylenblockcopolymer:
MFI 1,5 g/10 min, nicht nucleiert, Biegemodul 1280 MPa, Kristallitschmelzpunkt 164 °C (Dow Chemical)

### Beispiel 1

Die Folie wird auf einer Einschneckenextrusionsanlage mit Flachdüse mit flexibler Düsenlippe in einer Schicht hergestellt, gefolgt von Chillrollstation und einer einstufigen Kurzspaltreckanlage.
Recycliertes Folienmaterial (die Folie war ursprünglich hergestellt aus Dow 7C06) wird extrudiert, die Düsentemperatur beträgt 230 °C. Chillroll-Temperaturen und Reckwalzen-Temperaturen werden so eingestellt, dass die Kristallinität der Folie vor und nach dem Reckvorgang so hoch wie möglich wird. Das Reckverhältnis beträgt 1:6,5.

Folieneigenschaften (gegebenenfalls in Längsrichtung):

| | |
|---|---|
| Trägerdicke nach Reckung/ µm | 87 |
| Spannung bei 1 %-Dehnung/ MPa | 24,7 |
| Spannung bei 10 %-Dehnung/ MPa | 141 |
| Zugfestigkeit/ MPa | 282 |
| Bruchdehnung/ % | 37 |

### Vergleichsbeispiel 1

Die Folie wird auf einer Einschneckenextrusionsanlage mit Flachdüse mit flexibler Düsenlippe in einer Schicht hergestellt, gefolgt von Chillrollstation und einer einstufigen Kurzspaltreckanlage.
Dow 7C06 wird extrudiert, die Düsentemperatur beträgt 230 °C. Chillroll-Temperaturen und Reckwalzen-Temperaturen werden so eingestellt, dass die Kristallinität der Folie vor und nach dem Reckvorgang so hoch wie möglich wird. Das Reckverhältnis beträgt 1:6

Folieneigenschaften (gegebenenfalls in Längsrichtung):

| | |
|---|---|
| Trägerdicke nach Reckung/ µm | 84 |
| Spannung bei 1 %-Dehnung/ MPa | 25,1 |
| Spannung bei 10 %-Dehnung/ MPa | 143 |
| Zugfestigkeit/ MPa | 287 |
| Bruchdehnung/ % | 35 |

### Prüfmethoden

Die Messungen werden (sofern nichts anderes angegeben ist) bei einem Prüfklima von 23 ± 1 °C und 50 ± 5 % rel. Luftfeuchte durchgeführt.

### Biegemodul (Flexural Modulus)

Die Prüfung erfolgt nach ASTM D 790 A (Sekantenmodul bei 2 % Dehnung).

### Kristallitschmelzpunkt

Der Kristallitschmelzpunkt wird wie üblich ermittelt nach ISO 3146 mit DSC und einer Aufheizrate von 10 K/min.

### Dicke

Die Dicke wird nach DIN 53370 gemessen.

### Schmelzindex

Der Schmelzindex "Melt Flow Index" (MFI) wird gemäß DIN 53735 gemessen. Für Polyethylene werden Schmelzindices meistens angegeben in g/10 min bei 190 °C und einem Gewicht von 2,16 kg, für Polypropylene entsprechend, allerdings bei einer Temperatur von 230 °C.

### Zugdehnungsverhalten

Das Zugdehnungsverhalten wird, wenn nicht anders angegeben, in Maschinenrichtung (MD, Laufrichtung) geprüft. Die Zugfestigkeit wird in MP und die Bruchdehnung in % ausgedrückt; beide Werte werden nach der DIN 53455-7-5 gemessen. Die Prüfergebnisse, insbesondere die Bruchdehnung (Reißdehnung), sind durch eine hinreichende Zahl von Messungen statistisch abzusichern.
Die 1 %- oder 10 %-Dehnung werden nach DIN 53455-7-5 in Längsrichtung bestimmt.

## Patentansprüche

1. Verfahren zur Herstellung eines Klebebands mit einem Träger aus einer Folie, auf die zumindest einseitig eine Klebemasse aufgebracht ist,
wobei die Folie eine monoaxial gereckte Folie aus Polypropylen ist, die zu mindestens 80 Gew. % Polypropylen enthält, das zuvor zumindest einmal verarbeitet, vorzugsweise zumindest einmal extrudiert worden ist,
wobei die Folie ein Reckverhältnis bei der Reckung in Längsrichtung von 1:4 bis 1:10 aufweist, umfassend die Schritte:
• Aufschmelzen von Polypropylen, das zu mindestens 80 Gew. % aus Polypropylen besteht, das zuvor zumindest einmal verarbeitet, vorzugsweise extrudiert worden ist
• Extrudieren der Polypropylenschmelze zu einer Folie
• Monoaxiales Recken der Folie mit einem Reckverhältnis in Längsrichtung von 1:4 bis 1:10
• Beschichten der Folie mit einer Haftklebemasse

2. Verfahren nach Anspruch 1,
**dadurch gekennzeichnet, dass**
der Anteil an zumindest einmal extrudiertem Polypropylen in der Folie mindestens 85 Gew-%, vorzugsweise 90 Gew.-%, weiter vorzugsweise 95 Gew.-% und ganz besonders vorzugsweise 100 Gew.-% ist.

3. Verfahren nach Anspruch 1 oder 2,
**dadurch gekennzeichnet, dass**
die Dicke der Folie zwischen 20 und 2000 µm liegt, vorzugsweise zwischen 30 bis 170 µm, weiter vorzugsweise zwischen 40 bis 120 µm.

4. Verfahren nach zumindest einem der Ansprüche 1 bis 3,
**dadurch gekennzeichnet, dass**
das Reckverhältnis bei der Reckung in Längsrichtung 1:5 bis 1:9 beträgt, bevorzugt 1:6 bis 1:7,5, besonders bevorzugt 1:6 bis 1:6,5.

5. Verfahren nach zumindest einem der vorherigem Ansprüche,
**dadurch gekennzeichnet, dass**
die Klebemasse aus der Gruppe der Naturkautschuke oder aus einem beliebigen Blend aus Naturkautschuken und/oder Synthesekautschuken gewählt ist.

6. Verfahren nach zumindest einem der vorherigen Ansprüche,
**dadurch gekennzeichnet, dass**
die Klebemasse Klebharze enthält, vorzugsweise solche auf Basis von hydrierten, teilhydrierten oder nicht hydrierten Kohlenwasserstoffharzen, Terpenphenolen und Kolophoniumestern.

7. Verfahren nach zumindest einem der vorherigen Ansprüche,
**dadurch gekennzeichnet, dass**
die Klebemasse zumindest ein UV-Schutzmittel und/oder weitere Abmischkomponenten enthält, insbesondere Weichmacher, Alterungsschutzmittel, Verarbeitungshilfsmittel, Füllstoffe, Farbstoffe, optische Aufheller, Stabilisatoren, Endblockverstärkerharze.

8. Verwendung des Klebebandes nach zumindest einem der vorherigen Ansprüche als Fixierungsklebeband zum Sichern von beweglichen Teilen an Druckern, Kopiergeräten, Haushaltsgeräten wie Kühl- und Gefriergeräten, Elektro- und Gasherden so Möbeln.

9. Verwendung des Klebebandes nach zumindest einem der vorherigen Ansprüche als Strapping-Klebeband zum Bündeln und Palettieren von Kartonagen und anderen Gütern.

## Claims

1. Process for producing an adhesive tape having a carrier comprising a film applied on at least one side of which is an adhesive,
the film being a monoaxially drawn film of polypropylene, including at least 80 wt% of polypropylene which beforehand has been processed at least once, preferably extruded at least once,
the film having a draw ratio on drawing in the longitudinal direction of 1:4 to 1:10, comprising the steps of:
• melting polypropylene consisting to an extent of at least 80 wt% of polypropylene which beforehand has been processed, preferably extruded, at least once
• extruding the polypropylene melt to form a film
• monoaxially drawing the film with a draw ratio in the longitudinal direction of 1:4 to 1:10
• coating the film with a pressure-sensitive adhesive.

2. Process according to Claim 1,
**characterized in that**
the fraction in the film of polypropylene which has been extruded at least once is at least 85 wt%, preferably 90 wt%, more preferably 95 wt%, and very preferably 100 wt%.

3. Process according to Claim 1 or 2,
**characterized in that**
the thickness of the film is between 20 and 2000 µm, preferably between 30 to 170 µm, more preferably between 40 to 120 µm.

4. Process according to at least one of Claims 1 to 3,
**characterized in that**
the draw ratio on drawing in the longitudinal direction is 1:5 to 1:9, preferably 1:6 to 1:7.5, more preferably 1:6 to 1:6.5.

5. Process according to at least one of the preceding claims,
**characterized in that**
the adhesive is selected from the group of natural rubbers or from any desired blend of natural rubbers and/or synthetic rubbers.

6. Process according to at least one of the preceding claims,
**characterized in that**
the adhesive comprises tackifier resins, preferably those based on hydrogenated, partially hydrogenated, or unhydrogenated hydrocarbon resins, terpene-phenols, and rosin esters.

7. Process according to at least one of the preceding claims,
**characterized in that**
the adhesive comprises at least one UV protectant and/or other blending components, more particularly plasticizers, aging inhibitors, processing assistants, fillers, dyes, optical brighteners, stabilizers, endblock reinforcer resins.

8. Use of the adhesive tape according to at least one of the preceding claims as adhesive fastening tape for securing moving parts of printers, copiers, household appliances such as refrigerators and freezers, electrical and gas ovens, and furniture.

9. Use of the adhesive tape according to at least one of the preceding claims as adhesive strapping tape for bundling and palletizing cardboard-boxed items and other goods.

## Revendications

1. Procédé de fabrication d'une bande adhésive comprenant un support en un film, sur lequel un matériau adhésif est appliqué au moins sur un côté,
le film étant un film étiré monoaxialement en polypropylène, qui contient au moins 80 % en poids de polypropylène, qui a été usiné au moins une fois au préalable, de préférence qui a été extrudé au moins une fois,
le film présentant un rapport d'étirage lors de l'étirage dans la direction longitudinale de 1:4 à 1:10, comprenant les étapes suivantes :
- la fusion de polypropylène, qui est constitué d'au moins 80 % en poids de polypropylène qui a été usiné au moins une fois au préalable, de préférence qui a été extrudé,
- l'extrusion de la masse fondue de polypropylène en un film,
- l'étirage monoaxial du film avec un rapport d'étirage dans la direction longitudinale de 1:4 à 1:10,
- le revêtement du film avec un matériau adhésif de contact.

2. Procédé selon la revendication 1, **caractérisé en ce que** la proportion de polypropylène extrudé au moins une fois dans le film est d'au moins 85 % en poids, de préférence 90 % en poids, de manière davantage préférée 95 % en poids et de manière tout particulièrement préférée 100 % en poids.

3. Procédé selon la revendication 1 ou 2, **caractérisé en ce que** l'épaisseur du film est comprise entre 20 et 2 000 µm, de préférence entre 30 et 170 µm, de manière davantage préférée entre 40 et 120 µm.

4. Procédé selon au moins l'une quelconque des revendications 1 à 3, **caractérisé en ce que** le rapport d'étirage lors de l'étirage dans la direction longitudinale de 1:5 à 1:9, de préférence de 1:6 à 1:7,5, de manière particulièrement préférée de 1:6 à 1:6,5.

5. Procédé selon au moins l'une quelconque des revendications précédentes, **caractérisé en ce que** le matériau adhésif est choisi dans le groupe des caoutchoucs naturels ou un mélange quelconque de caoutchoucs naturels et/ou de caoutchoucs synthétiques.

6. Procédé selon au moins l'une quelconque des revendications précédentes, **caractérisé en ce que** le matériau adhésif contient des résines adhésives, de préférence à base de résines hydrocarbonées hydrogénées, partiellement hydrogénées ou non hydrogénées, de terpène-phénols et d'esters de colophane.

7. Procédé selon au moins l'une quelconque des revendications précédentes, **caractérisé en ce que** le matériau adhésif contient au moins un agent de protection contre les UV et/ou d'autres composants de mélange, notamment des plastifiants, des agents antivieillissement, des adjuvants d'usinage, des charges, des colorants, des azurants optiques, des stabilisateurs, des résines renforçantes à séquences terminales.

8. Utilisation de la bande adhésive selon au moins l'une quelconque des revendications précédentes en tant que bande adhésive de fixation pour consolider des parties mobiles sur des imprimantes, des photocopieuses, des appareils ménagers tels que des réfrigérateurs et des congélateurs, des fours électriques et au gaz, ainsi que des meubles.

9. Utilisation de la bande adhésive selon au moins l'une quelconque des revendications précédentes en tant que bande adhésive de cerclage pour le liage et la palettisation de cartons et d'autres produits.
